(19)

**Europäisches Patentamt**
**European Patent Office**
**Office européen des brevets**

(11) **EP 2 456 184 B1**

(12) **EUROPEAN PATENT SPECIFICATION**

(45) Date of publication and mention
of the grant of the patent:
**14.08.2013 Bulletin 2013/33**

(51) Int Cl.:
***H04M 3/56*** *(2006.01)*

(21) Application number: **10191720.1**

(22) Date of filing: **18.11.2010**

(54) **Method for playback of a telephone signal**

Verfahren zur Wiedergabe eines Telefonsignals

Procédé pour la reproduction d'un signal téléphonique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.05.2012 Bulletin 2012/21**

(73) Proprietor: **Harman Becker Automotive Systems
GmbH
76307 Karlsbad (DE)**

(72) Inventors:
• **Iser, Bernd
89077, Ulm (DE)**

• **Roder, Mathias
19829 Berlin (DE)**
• **Schmidt, Gerhard
76307, Karlsbad (DE)**

(74) Representative: **Grünecker, Kinkeldey,
Stockmair & Schwanhäusser
Leopoldstrasse 4
80802 München (DE)**

(56) References cited:
**WO-A1-2007/006856        US-A1- 2007 217 590
US-A1- 2009 041 271        US-A1- 2010 266 112**

EP 2 456 184 B1

**Description**

The present invention refers to a method for playback of a telephone signal during a conference call.

In a conference call three or more parties participate in a telephone call. Each party may comprise one or more participants at one location who communicate via the conference call with participants of other parties located at different locations.

For each party, the individual audio signals of the other parties are summed up by a network operator and transmitted in a single telephone signal. The parties usually have no influence on the summation process.

In order to allow each of the participants of a party to actively participate in the conference call, often a hands-free equipment is used. In particular, the telephone signal is usually played back using a loudspeaker. In this way, each of the participants of a party can listen to the communication.

A drawback of this playback method is, however, that the participants cannot easily distinguish between different remote speakers. This is particularly valid if a participant cannot fully focus on the audio content as, for instance, he is participating the conference call in a car and is, thus, also occupied with driving.

From document US 2007/0217590 A1 a system for facilitating to an end-user the recognition of other participants attending a conference call is known, comprising means attached to the end-user's telephone for receiving signals from the telephone line, means for analyzing the telephone line signals and associating a unique caller identification to each new participant joining the conference call, means for associating with each such caller identification, a unique position in a representation of the conference call, and means for representing to the end-user such unique position for all participants in the conference call.

WO 2007/006856 A1 discloses a method for distinguishing speakers in a conference call of a plurality of participants, in which method speech frames of the conference call are received in a receiving unit, which speech frames include encoded speech parameters. A spatialization effect is created in a terminal reproducing the audio signal according to notified differences by placing the participants at distinct positions in an acoustical space of the audio signal.

From 2010/0266112 A1 a system is known in which a processor processes received signals corresponding to a voice of a particular participant in a multiparty conference. A position of voices having similar characteristics are spaced apart from each other in a virtual space.

US 2009/0041271 A1 discloses a method for audio conference between conference participants via their respective terminals. The method comprises determining a setpoint for positioning a speaker within a virtual space of a listener.

It is the problem underlying the invention to provide an improved method for playback of a telephone signal during a conference call, which allows participants to more easily distinguish between different remote speakers. This problem is solved by a method according to claim 1.

Accordingly, the invention provides a method for playback of a telephone signal during a conference call using a multi-loudspeaker playback system, comprising the steps of:

receiving a telephone signal, wherein the telephone signal comprises audio data from a plurality of remote speakers,

identifying in the received telephone signal at least two remote speaker signals corresponding to at least two different remote speakers based on the audio data,

processing the received telephone signal to obtain at least two output signals each corresponding to a different one of the at least two remote speaker signals, and

playing back the at least two output signals using the multi-loudspeaker playback system, such that for a listener at a predetermined listening position one of the at least two output signals originates from a first apparent position and a second one of the at least two output signals originates from a second apparent position, different from the first apparent position.

As the output signals corresponding to at least two different remote speakers are output such that for a listener they seem to originate from two different positions, the method allows participants of the conference call to more easily distinguish between different remote speakers. In particular, participants can more easily relate an audio output to a particular remote speaker.

As used herein, a conference call may correspond to an audio teleconference. A plurality of parties, in particular, three or more parties, may participate in the conference call. One or more of the participating parties may use the method for playback of a telephone signal during the conference call as described herein.

Each party may comprise one or more participants or speakers. The one or more participants or speakers of a party may be located at the same location, for example in a conference room or in a vehicle, such as a car. The participants of the other participating parties may be located at different or remote locations.

The received telephone signal may correspond to a summation of the audio signals of the plurality of parties participating in the conference call. The summation may be performed by a network operator. In other words, a party participating in the conference call may not have a direct access to the individual audio signals of the other participating parties.

The received telephone signal may contain audio data form a plurality, i.e. of two or more, remote speakers. The audio data from a remote speaker may comprise or consist of a speech component and/or a background noise component. As used herein, the term "audio data" may particularly not refer to metadata, such as a header of a signal.

As used herein a remote speaker signal may be a part of the received telephone signal corresponding to a speech signal and/or a background noise signal of a remote speaker, in particular, a speech signal and/or a background noise signal transmitted by a remote speaker to a network operator.

The at least two remote speaker signals may each correspond to a different one of at least two different remote speakers.

The multi-loudspeaker playback system may correspond to a hands-free equipment. In particular, the multi-loudspeaker playback system may comprise a plurality, in particular, two or more, loudspeakers.

As used herein, an apparent or virtual position may correspond to a position or direction from which an audio signal, which is played back or output by the loudspeakers of the multi-loudspeaker playback system seems to originate according to the perception of a local listener.

In other words, the at least two output signals may be played back such that for a listener at a predetermined listening position one of the at least two output signals seems to originate from a first position and a second one of the at least two output signals seems to originate from a second position, different from the first position.

In particular, for a listener at a predetermined listening position a played back acoustic signal or played back sound signal corresponding to one of the at least two output signals originates or seems to originate from a first apparent position and a played back acoustic signal or played back sound signal corresponding to a second one of the at least two output signals originates or seems to originate from a second apparent position, different from the first apparent position. an acoustic

The step of playing back of an output signal using the multi-loudspeaker playback system, may comprise converting the output signal into one or a plurality of loudspeaker signals. In the case that the output signal is converted into a plurality, i.e. two or more, loudspeaker signals, each of the loudspeaker signals may correspond to a particular or predetermined loudspeaker of the multi-loudspeaker playback system. In particular, each of the loudspeaker signals may correspond to a different loudspeaker.

Converting an output signal into a loudspeaker signal may comprise a weighting of the output signal with an intensity weighting factor. The intensity weighting factor may modify the amplitude of the output signal for the respective loudspeaker signal. If the output signal is converted into a plurality of loudspeaker signals, a set of intensity weighting factors may be used, in particular wherein each intensity weighting factor of the set may correspond to a different loudspeaker signal, in particular to a different loudspeaker of the multi-loudspeaker playback system. One or more of the intensity weighting factors of the set may be zero or may have a value larger than zero.

Playing back the at least two output signals using the multi-loudspeaker playback system may comprise converting one of the at least two output signals into a plurality, i.e. two or more, loudspeaker signals using a first set of intensity weighting factors and converting a second one of the at least two output signals into a plurality, i.e. two or more, loudspeaker signals using a second set of intensity weighting factors, wherein the second set of intensity weighting factors differs from the first set of intensity weighting factors. In other words, an intensity weighting factor of the first set may differ for at least one loudspeaker signal from the intensity weighting factor for the same loudspeaker signal of the second set.

In this way, the at least two output signals may be played back using the multi-loudspeaker playback system, such that for a listener at a predetermined listening position one of the at least two output signals seems to originate from a first position and a second one of the at least two output signals seems to originate from a second position, different from the first position.

Converting an output signal into a loudspeaker signal may further comprise delaying the output signal with a predetermined time delay. If the output signal is converted into a plurality of loudspeaker signals, a set of time delays may be used, in particular wherein each time delay of the set corresponds to a different loudspeaker signal, in particular to a different loudspeaker of the multi-loudspeaker playback system.

Playing back the at least two output signals using the multi-loudspeaker playback system may comprise converting one of the at least two output signals into a plurality, i.e. two or more, loudspeaker signals using a first set of intensity weighting factors and a first set of time delays and converting a second one of the at least two output signals into a plurality, i.e. two or more, loudspeaker signals using a second set of intensity weighting factors and a second set of time delays, wherein the second set of intensity weighting factors and/or the second set of time delays differs from the first set of intensity weighting factors and/or the first set of time delays.

The processing step may particularly comprise a filtering and/or a weighting of the received telephone signal. The filtering may be performed using one or more filters.

The weighting of the received telephone signal may particularly correspond to an attenuation of the received telephone signal.

Processing the received telephone signal may further comprise delaying the received telephone signal, thereby obtaining a delayed telephone signal and weighting and/or filtering the delayed telephone signal. In other words, the received telephone signal may first be delayed and then weighted and/or filtered. By delaying the telephone signal before weighting and/or filtering, it is possible to account for the computational time necessary for identifying the at least two remote speaker signals in the received telephone signal.

In particular, the filtering and/or the weighting of the telephone signal, in particular of the delayed telephone signal may be based on a result of the identification step.

The method may further comprise determining reliability information on the identification of the at least two remote speaker signals, in particular wherein the spatial distance between the first and the second apparent position may be determined based on the determined reliability information. Reliability information may refer to information or to a measure indicating the reliability or statistical significance of the identification of the at least two remote speaker signals. In other words, the reliability of the identification of the at least two speaker signals may be quantified or ranked using the reliability information. The reliability information may be based on statistical quantities determined during the identification step.

The higher the statistical significance with which the at least two remote speaker signals can be identified, the higher the reliability of the identification may be set.

The higher the reliability of the identification, the larger the spatial distance between the first and the second apparent position may be set.

The reliability information may be determined based on an autocorrelation function of the received telephone signal. In particular, the reliability information may correspond to the smoothed maximum of the autocorrelation function of the received telephone signal.

The identifying step may comprise combining results of two or more different identification methods. In this way, the reliability of the identification of the at least two remote speaker signals may be increased.

In this case, determining the reliability information may comprise determining a weighted sum of the reliability information corresponding to each identification method. In other words, the combined reliability information may correspond to a weighted sum of the reliability information of the individual identification methods.

The identifying step may comprise a pitch estimation and/or a background noise estimation and/or a spectral envelope comparison. In other words, the identification methods may comprise a pitch estimation and/or a background noise estimation and/or a spectral envelope comparison.

The pitch estimation may comprise repeatedly estimating at least one pitch frequency of the received telephone signal and analyzing a frequency of occurrence of estimated pitch frequencies. In this way, particularly, female remote speakers can be distinguished advantageously from male remote speakers.

The pitch estimation may be based on a correlation analysis, in particular on an analysis of the autocorrelation function of the received telephone signal.

The method may further comprise determining at least one pitch threshold frequency which separates frequency ranges of the at least two different remote speakers from each other. In this way, signals with certain frequencies in the telephone signal can be related to a specific remote speaker.

The background noise estimation may comprise a spectral envelope determination of the background noise in the received telephone signal. With the background noise estimation it may be possible to identify a remote speaker due to the background noise present at the location of the remote speaker. For example, if a remote speaker is participating in the conference call while driving a car, the remote speaker may be identified based on the noise of the car.

The background noise estimation may particularly comprise determining at least one noise component in the audio data of the received telephone signal.

The spectral envelope comparison may comprise a spectral envelope determination for speech signals in the received telephone signal. In other words, the spectral envelope comparison may comprise determining at least one speech component in the audio data of the received telephone signal. The determined spectral envelopes may then be used to identify different remote speakers.

The method may further comprise determining an apparent position for the at least two output signals. Determining an apparent position may particularly be based on the determined reliability information.

Determining an apparent position may comprise determining a set of intensity weighting factors and/or a set of time delays for each of the at least two output signals. The determined set of intensity weighting factors and/or the determined set of time delays may be used to convert each of the at least two output signals into one or more loudspeaker signals for the plurality of loudspeakers of the multi-loudspeaker playback system.

Determining an apparent position may comprise determining an apparent position for the case of minimal reliability and/or for the case of maximum reliability of the identification of the at least two remote speaker signals.

The received telephone signal may be converted into a sampled telephone signal using a predetermined sampling rate. In other words, the received telephone signal may be sampled at a predetermined sampling rate, thereby obtaining a sampled telephone signal.

The sampling may be performed before the identifying step. The identifying, the processing and the play back step may, thus, be performed using the sampled telephone signal.

The invention further provides a computer program product comprising one or more computer-readable media having computer executable instructions for performing the steps of a method as described above, when run on a computer.

The invention further provides an apparatus for playback of a telephone signal during a conference call comprising:

means for receiving a telephone signal, wherein the telephone signal comprises audio data from a plurality of remote speakers, and

a control means, wherein the control means is configured to:

identify in the received telephone signal at least two remote speaker signals corresponding to at least two different remote speakers based on the audio data,

process the received telephone signal to obtain at least two output signals each corresponding to a different one of the at least two remote speaker signals, and

playback the at least two output signals using a multi-loudspeaker playback system, such that for a listener at a predetermined listening position one of the at least two output signals originates from a first apparent position and a second one of the at least two output signals originates from a second apparent position, different from the first apparent position.

In other words, the invention provides an apparatus for performing one of the above described methods for playback of a telephone signal during a conference call. Thus, the apparatus may be configured such as to perform one of the above described methods.

An apparatus as described herein may be used by one or more parties participating in a conference call for playback of a received telephone signal. The apparatus may particularly be used in a conference room or in a vehicle, in particular in a car.

The apparatus may comprise or may be combined with a multi-loudspeaker playback system. In other words, the invention provides a system comprising an apparatus as described above and a multi-loudspeaker playback system. The apparatus and/or the multi-loudspeaker playback system may comprise one or more of the above described features.

The apparatus may further comprise at least one microphone for recording audio signals. The at least one microphone may be used to record speech signals of speakers of the party participating in the conference call.

Advantageous embodiments will be described in combination with the enclosed Figures.

Figure 1        illustrates an exemplary multi-loudspeaker playback system;

Figure 2        illustrates an exemplary method for playback of a telephone signal;

Figure 3        illustrates an exemplary method for identifying at least remote speaker signals in a received telephone signal;

Figure 4        illustrates the relative frequency of occurrence of estimated pitch frequencies;

Figure 5        illustrates an exemplary telephone signal comprising remote speaker signals from two remote speakers;

Figure 6        illustrates exemplary characteristics of attenuations used for processing the exemplary telephone signal of Fig. 5;

Figures 7a - 7c    illustrates an exemplary method for processing a telephone signal;

Figure 8        illustrates an exemplary characteristic of an exemplary post filter; and

Figure 9        illustrates an alternative method for processing an exemplary telephone signal.

During a conference call, each participating party may receive a telephone signal comprising audio signals from the other parties participating in the conference call. In the following, it is assumed that each party comprises at least one speaker, wherein for each party the speakers not comprised in the respective party are referred to as "remote speakers" while speakers comprised in the respective party are referred to as "local speakers".

The audio signals of remote speakers are received at each participating party via a single telephone signal. The telephone signal is transmitted to each party by a network operator after receiving and summing up the audio signals of the other participating parties.

In contrast to computer based conference systems which receive the individual audio signals of the participating parties, in a conference system based on a telephone signal, the individual audio signals of the remote parties are not separately available to the participating parties themselves.

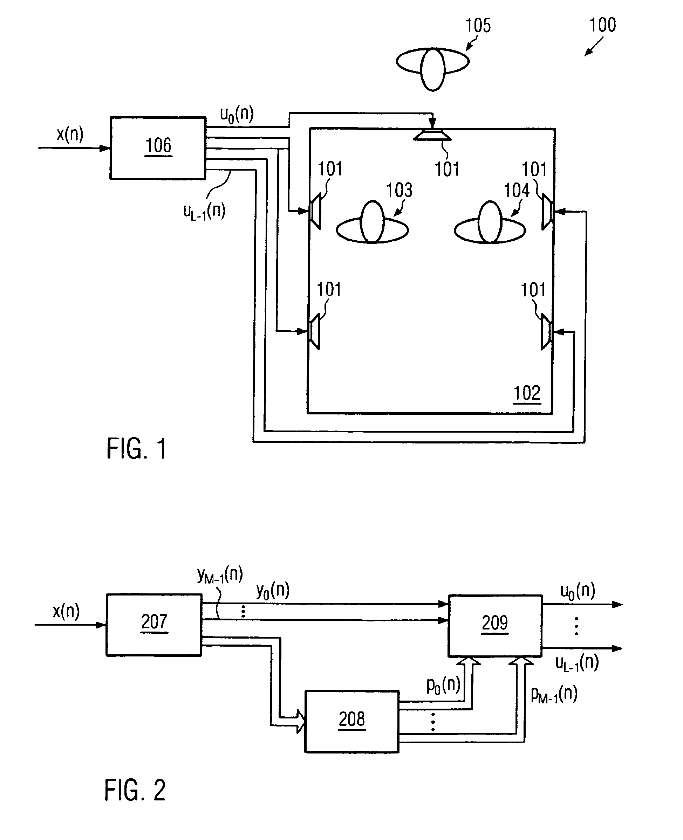

Figure 1 illustrates an exemplary multi-loudspeaker playback system 100 used in the interior 102 of a road vehicle, in particular, of a car. Although the multi-loudspeaker playback system in this case is shown in the interior 102 of a vehicle, the multi-loudspeaker playback system may also be placed in a conference room or at a different location used by a party participating in a conference call.

The multi-loudspeaker playback system 100 comprises a plurality of loudspeakers 101. In this example, five loudspeakers 101 are provided. However, the multi-loudspeaker playback system may comprise more or less than five loudspeakers 101. In particular, the multi-loudspeaker playback system may comprise two or more loudspeakers 101.

Figure 1 additionally illustrates two local speakers 103 and 104. Local speaker 103 may, for instance, be the driver of the vehicle in which the multi-loudspeaker playback system 100 is comprised. Local speaker 104 may be the front seat passenger of the vehicle.

The multi-loudspeaker playback system 100 allows outputting or playing back of an output signal at an arbitrary apparent or virtual position. For this purpose, the output signal is converted into one or more loudspeaker signals, each corresponding to a loudspeaker 101. The loudspeaker signals corresponding to the different loudspeakers 101 may be chosen such, that for a local speakers 103, 104, the played back output signal, e.g. corresponding to a remote speaker, appears to originate at a predetermined apparent or virtual position 105. In other words, according to the perception of the local speaker 103, 104, the remote speaker is located at the predetermined apparent position 105.

This effect may be achieved by fragmenting an input signal x(n) into 5, or more generally into L, individual loudspeaker signals u(n), each corresponding to a different loudspeaker 101 of the multi-loudspeaker playback system 100. Each loudspeaker signal u(n) is delayed for a predetermined amount of time and multiplied with a predetermined intensity weighting factor, i.e.

$$u_i(n) = a_i\, x(n - V_i)$$

where $a_i$ denotes the intensity weighting factor of the $i^{\text{th}}$ loudspeaker signal, $V_i$ denotes the time delay of the $i^{\text{th}}$ loudspeaker signal (in pulses) and

$$i \in \{0, \ldots, L - 1\}$$

where L is the number of loudspeakers in the multi-loudspeaker system 100.

By adapting the time delay and the intensity weighting factors of the individual loudspeaker signals u(n) based on, for example, a dispersion model for point-shaped or point-like acoustic sources, an output signal may be played back such that for a listener at a predetermined listening position, e.g. the seat of the driver 103, the played back output signal seems to originate from a predetermined apparent position. In the example shown in Fig. 1, the apparent position 105 is centred in front of the two local speakers 103, 104.

In this example, when additionally driving the car, the local speaker 103 cannot entirely focus on the conference call. Thus it may be difficult for him or her to distinguish between different remote speakers.

Therefore, at least two remote speaker signals may be identified in a received telephone signal and played back using the multi-loudspeaker playback system 100, such that for a listener at a predetermined listening position one of the at least two output signals seems to originate from a first apparent position and a second one of the at least two output signals seems to originate from a second apparent position, different from the first apparent position.

Figure 2 shows an exemplary method for playback of a telephone signal during a conference call using a multi-loudspeaker playback system. In the following, it is assumed that M remote speakers are participating in the conference call. The remote speaker signals, i.e. the audio signals corresponding to the remote speakers are comprised in a single telephone signal created by a network operator.

The telephone signal may be sampled using a predetermined sampling rate. The sampled telephone signal x(n) is input to a signal analysis and separation module 207. In module 207, the sampled telephone signal x(n) is analysed in order to identify at least two remote speaker signals corresponding to at least two different remote speakers. The parameter n used herein denotes a time parameter.

Module 207 may output M output signals y(n) each corresponding to a different remote speaker signal obtained by processing the telephone signal x into the individual output signals y.

In particular, each output signal y(n) output by module 207 may contain only the audio signal corresponding to the respective remote speaker. Module 207 may additionally output additional information which is used for determining the apparent or virtual positions for playing back the output signals. The additional information may, for example, correspond to reliability information indicating the reliability or statistical significance of the identification of the at least two remote speaker signals.

Apparent positions p(n) are in this example determined by a localization module 208. The apparent positions p(n) or apparent acoustic playback positions are given in two dimensions as

$$ \boldsymbol{p_m}(n) = \Big[ p_{\mathrm{x},m}(n),\ p_{\mathrm{y},m}(n) \Big]^{\mathrm{T}} $$

while in three dimensions the apparent positions p(n) read:

$$ \boldsymbol{p_m}(n) = \Big[ p_{\mathrm{x},m}(n),\ p_{\mathrm{y},m}(n),\ p_{\mathrm{z},m}(n) \Big]^{\mathrm{T}} $$

where m denotes the $m^{\mathrm{th}}$ remote speaker, x, y and z denote the spatial coordinates and n denotes the time. In other words, the apparent positions may be time dependent.

Module 207 may determine reliability information on the identification of the remote speaker signals. In particular, the reliability information may be related to the statistical significance obtained in the identification process of the at least two remote speaker signals comprised in the telephone signal.

Both the output signals y(n) and the apparent positions p(n) are then input into a multi-loudspeaker playback system, e.g. such as the one shown in Figure 1, comprising a control element 209. The control element 209 may determine the loudspeaker signals u(n) corresponding to the individual loudspeakers of the multi-loudspeaker playback system based on the output signals y and the corresponding apparent positions p.

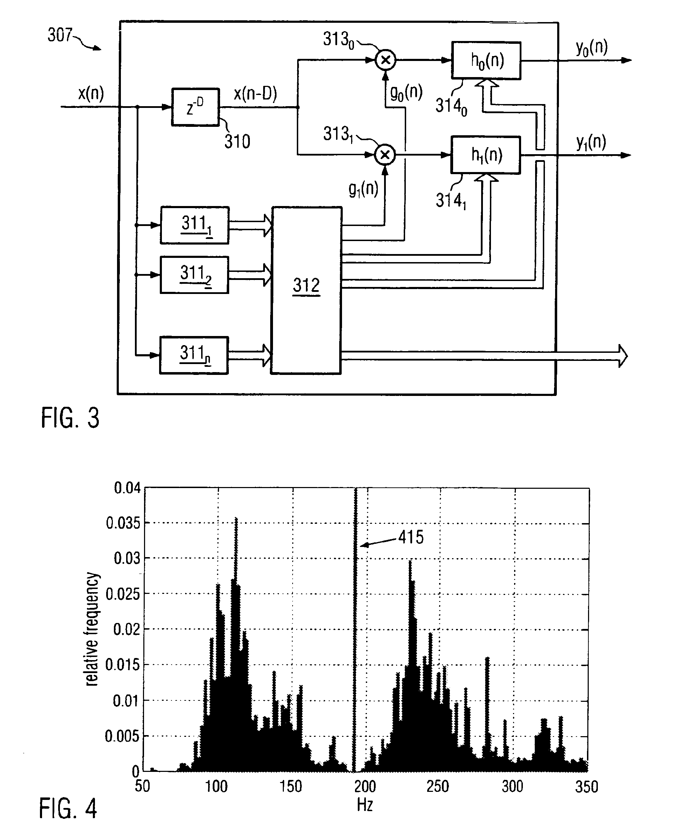

Figure 3 illustrates further details on the module 307 which analyzes the received telephone signal and outputs signals y(n) and the reliability information. In this context M=2 is assumed, i.e. the number of remote speakers is 2. However, M may also be larger than two.

A sampled telephone signal x(n) is provided to a plurality of analysis elements $311_1$ to $311_N$. As the analysis in the analysis elements 311 takes a certain amount of computational time, the sampled telephone signal is also input into a delay element 310 which delays the telephone signal for a predetermined amount of time D. The delay element 310 may, for instance, delay the telephone signal for 10 ms, which corresponds approximately to the time which usual analysis takes in the analysis elements 311.

The output or the results of the analysis elements 311 may be combined in combination element 312, which also determines weighting factors g(n) and filter coefficients h(n) used for weighting and/or filtering the delayed telephone signal x(n-D). For the weighting, weighting elements $313_0$ and $313_1$ and for the filtering, filter elements $314_0$ and $314_1$ are provided.

By weighting and/or filtering of the delayed telephone signal x(n-D) two output signals y(n) may be obtained each corresponding to one of the two remote speaker signals identified in the received telephone signal.

If at a time n only a first remote speaker signal is present in the telephone signal, the weighting factors may be chosen as:

$$ g_0(n) \;=\; 1, $$

$$g_i(n) = 0.$$

In this case, the filtering may be omitted and the output signals may be:

$$y_i(n) = x(n - D)\, g_i(n).$$

If more than one remote speakers are speaking simultaneously, a filtering may be employed. In this case, no weighting may be performed or the weighting factors may be chosen to be in a range between 0,95 and 1, in particular 0,98 and 1, for all remote speaker signals.

The aim of the filtering process is to obtain output signals y, each comprising the pitch frequency and its harmonics of only one remote speaker.

The analysis of the telephone signal x in the analysis elements 311 for identifying remote speaker signals may be performed in different ways. In particular, identifying remote speaker signals may comprise a pitch estimation and/or a background noise estimation and/or a spectral envelope comparison.

The pitch or pitch frequency may refer to the perceived fundamental frequency of a speech signal. For determining or estimating a pitch frequency, various methods are known, most relying on a correlation analysis.

For instance, an autocorrelation may be determined as

$$\hat{s}_{xx}(l, n) = \frac{1}{2D + 1} \sum_{i=-D}^{D} x(n - i)\, x(n - l - i)$$

and normalized to the present power, i.e.

$$\hat{s}_{\text{norm},xx}(l, n) = \frac{\hat{s}_{xx}(l, n)}{\hat{s}_{xx}(0, n)}$$

where l denotes an offset.

In a predetermined range of offsets, the argument of the maximum may be determined as

$$\hat{l}_{\text{pitch}}(n) = \underset{l_{\min} \le l \le l_{\max}}{\operatorname{argmax}} \left\{ \hat{s}_{\text{norm},xx}(l, n) \right\}.$$

If the normalized autocorrelation value at this offset exceeds a predetermined threshold $s_0$, the current pitch frequency may be determined as:

$$\hat{f}_{pit}(n) = \begin{cases} \dfrac{f_s}{\hat{l}_{pitch}(n)} & \text{if } (\hat{s}_{norm,xx}(\hat{l}_{pitch}(n), n) > s_0), \\ un\det ectable & otherwise \end{cases}$$

where $f_s$ denotes the sampling frequency.

Other pitch estimation methods may be employed as well, for instance based on cepstral analysis or on a harmonized spectral product analysis.

Additional improvements of the estimation may be employed as well, for example by an interpolation subsequent to the autocorrelation determination step or by an upstream prediction error filter.

Furthermore, a plurality of maxima of the autocorrelation function may be determined. In this way, a plurality of pitch frequencies may be estimated.

An appropriate pitch estimation process known to the skilled person may be applied, which is capable of estimating the pitch frequency of a plurality of simultaneously speaking speakers, i.e. of overlapping remote speaker signals.

The pitch frequency may be estimated repeatedly and the frequency of occurrence of estimated pitch frequencies may be analyzed. Such an analysis is illustrated in Figure 4. If the pitch frequency is interpreted as a random process, a probability density function may be estimated.

Figure 4 shows an illustration of a frequency of occurrence distribution of different estimated pitch frequencies. In this case, two clearly distinct maxima in the distribution can be found. In this case, for instance, a male and a female speaker may participate in the conference call. The male remote speaker may correspond to the lower pitch frequencies around 120 Hz while the female remote speaker may correspond to the higher estimated pitch frequency around 240 Hz.

A frequency of occurrence may be modelled, for example, using a Gaussian density model. A separation threshold 415 may be determined based on this modelling, wherein the separation threshold 415 separates pitch frequencies corresponding to a first remote speaker, for example, the male speaker, and pitch frequencies of a second remote speaker, for example, the female speaker.

If no pitch frequency can be determined at a time n, the estimated pitch frequencies of a previous time step may be maintained.

Denoting the estimated probability of activity of a remote speaker m, i.e. the presence of a remote speaker signal corresponding to remote speaker m, as $act_{0,m}(n)$, this quantity may be estimated as:

$$
act_{0,m}(n) = \begin{cases} 1, & \text{if } \hat{f}_{pit}(n) \in Int_m(n), \\ act_{0,m}(n)\,\Delta_{\text{fast}}, & \text{if } \hat{f}_{pit}(n) \notin Int_m(n), \\ act_{0,m}(n)\,\Delta_{\text{slow}}, & \text{if no pitch frequency can be determined} \end{cases}
$$

In this case $Int_m(n)$ are the intervals of the pitch frequencies determined in the analysis described above, i.e, for the example described above,

$$
Int_0(n) = \left[ 50\,\text{Hz}, f_{\text{pit,grenze}}(n) \right],
$$

$$
Int_1(n) = \left[ f_{\text{pit,grenze}}(n), 300\,\text{Hz} \right].
$$

If more than one pitch frequency estimation should be performed simultaneously, in particular for determining the pitch frequency of two or more remote speakers talking in parallel, the pitch frequency $\hat{f}_{pit}(n)$ in the above equations may be replaced by the set of simultaneously detected pitch frequencies $\{\hat{f}_{pit,j}(n)\}$, wherein the index j denotes the simultaneously detected pitch frequencies.

Additionally, reliability information may be determined. If, for example, no separation threshold may be determined, the reliability information $r_0(n)$ may be set to 0.

If a separation threshold can be determined, the maximum of the normalized autocorrelation function during speech activity can be smoothed and used as reliability information, i.e.

$$r_0(n) = \begin{cases} \beta_r\, r_0(n-1) + (1-\beta_r)\, \hat{s}_{\text{norm},xx}\left(\hat{l}_{\text{pitch}}(n), n\right), & \text{if } \left(\hat{s}_{\text{norm},xx}\left(\hat{l}_{\text{pitch}}(n), n\right) > s_0\right) \\ r_0(n-1), & \text{otherwise.} \end{cases}$$

The time constant $\beta_r$ should be chosen close to 1, i.e.

$$0 \ll \beta_r < 1.$$

Alternatively or additionally to the pitch frequency estimation, different remote speakers may be identified using an analysis of the noise background in the received telephone signal. If different remote speakers participate in the conference call in different acoustic environments, the corresponding noise background will differ. This difference may be used in order to identify different remote speakers.

In particular, the network operator may simply add up the audio signal received from the different remote parties participating in a conference call and may forward the summed signal to a local party. Alternatively, the network operator may perform a speech detection process for the individual audio signals of the individual parties. In this case, active channels, i.e. audio signals of participants which contain a speech signal or speech component may get a higher weight in a weighted summation than audio signals which do not contain a speech signal. In this case, the total background noise of the telephone signal may be reduced as compared to a simple summation of all audio signals.

For the analysis, the sampled telephone signal x(n) may be divided into overlapping blocks, in particular, wherein each block has a length of approximately 20 ms. The time offset between two blocks may be 5 ms to 10 ms.

Each of the blocks may then be classified as speech or noise using a speech activity detector known in the art. If the block is classified as noise, the spectral envelope for the block may be determined. This may be done using a FFT (Fast Fourier Transform) and a subsequent smoothing of the magnitude spectrum in frequency direction or using a parametric spectral estimate, for example, a LPC (linear predictive coding) analysis.

Using these spectral envelope estimates of the blocks, a frequency of occurrence analysis may be performed similar to the one described above, in particular at the beginning of the conference call. If different maxima can be determined, different remote speakers may be distinguished based on the background noise. If no separation can be made, the reliability information according to this method $r_1(n)$ may be set to 0.

The spectral envelope may be specified using cepstral vectors $c_{\text{ger}}(n)$. The cepstral vectors may be determined based on LPC coefficients (see B. Iser, G. Schmidt: Bandwidth Extension of Telephony Speech, in E. Hänsler, G. Schmidt (Editors), Speech and Audio Processing in Adverse Environments, pages 135 - 184, Springer, Berlin, Germany, 2008).

The cepstral vector of a block is only modified at a time n, if the block is classified as noise. If the block is specified as speech the cepstral vector of time n - 1 may be maintained.

The determined accumulation points of the noise analysis may be determined as cepstral vectors $c_m(n)$, where m refers to the $m^{\text{th}}$ remote speaker.

The norm of the cepstral vectors of the blocks and the cepstral vector of the accumulation points may be determined as:

$$\left\| c_{\text{ger}}(n) - c_m(n) \right\|$$

The argument of the minimal distance $d_{\text{ger}}(n)$ may be used to classify a remote speaker as being active, i.e.

$$d_{\text{ger}}(n) = \arg\min_m \left\{ \left\| c_{\text{ger}}(n) - c_m(n) \right\| \right\}$$

A smoothing may be used as indication of activity of a remote speaker, i.e.

$$act_{1,m}(n) = \begin{cases} \min\left\{ act_{1,m}(n-1)\,\Delta_{inc},\, 1 \right\} & \text{if } \left( m = d_{ger}(n) \right) \\ act_{1,m}(n-1)\,\Delta_{dec}, & \text{otherwise} \end{cases}$$

wherein

$$0 \ll \Delta_{dec} < 1 < \Delta_{inc} \ll \infty.$$

As reliability information, the inverse of the minimum norm related to the sum of all inverse norms may be used, i.e.

$$r_1(n) = \frac{\dfrac{1}{\left\| c_{ger}(n) - c_{d_{ger}(n)}(n) \right\|}}{\displaystyle\sum_{m=0}^{M-1} \dfrac{1}{\left\| c_{ger}(n) - c_m(n) \right\|}}$$

Additionally, the cepstral vectors of the accumulation points may be adapted to the current noise, for example as:

$$c_m(n) = \begin{cases} \beta_c\, c_m(n-1) + (1 - \beta_c)\, c_{d_{ger}(n)}(n), & \text{if } \left( m = d_{ger}(n) \right) \\ c_m(n-1), & \text{otherwise,} \end{cases}$$

wherein

$$0 \ll \beta_c < 1.$$

Alternatively or additionally, different remote speakers may be identified using a spectral envelope comparison of the speech signals in the received telephone signal. This may be performed analogously to the analysis of the noise background described above, wherein the blocks are analysed if they are classified as speech. However, in this case there are usually significantly more cepstral vectors than remote speakers, in contrast to the analysis above.

Using a learning process, the cepstral vectors of the accumulation points may be related to remote speakers and, thus, a model may be trained for each remote speaker. In this context, known methods may be employed, which are also used in the field of speaker recognition.

After the training, for each cluster of cepstral vectors the vector with the smallest distance to the current spectral envelope vector may be determined. Based on the cepstral vectors thus determined, the cluster with the vector having the smallest distance (as absolute value) is selected.

Also for this method, a speaker activity $act_{2,m}(n)$ and a reliability information $r_2(n)$ may be determined.

Results from different identification analysis may be combined. Additionally or alternatively to the above described analysis other indentifying methods may be performed.

For combining different results, the methods may be associated with a weighting factor $a_i$. The weighting factor for an analysis which is considered to yield unreliable results may be chosen close to 0 while for an analysis which is considered to yield reliable results it may be chosen close to 1.

The reliability of the combined analysis may be expressed as reliability information r(n), which may read:

$$r(n) = \frac{\sum\limits_{i=0}^{N-1} a_i\, r_i(n)}{\sum\limits_{i=0}^{N-1} a_i}.$$

Similarly, a speaker activity for the different remote speakers, in particular for the different remote speaker signals, may be estimated as:

$$act_m(n) = \frac{\sum\limits_{i=0}^{N-1} a_i\, r_i(n)\, act_{i.m}(n)}{\sum\limits_{i=0}^{M-1} a_i\, r_i(n)}.$$

The received telephone signal may be processed such as to obtain at least two output signals each corresponding to a different one of the at least two remote speakers.

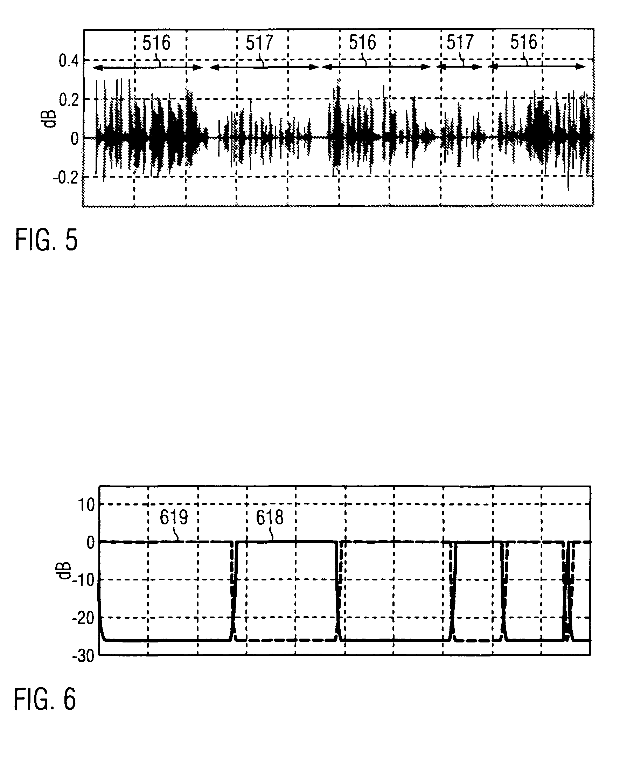

Figure 5 illustrates an exemplary telephone signal received by an arbitrary local party participating in a conference call. In the telephone signal, different segments are marked using arrows indicating ranges wherein different remote speakers are speaking, i.e. different remote speaker signals. In this example, two remote speakers are speaking alternately. In sections 516, a first remote speaker is active while in sections 517, a second remote speaker is speaking.

Once different remote speakers have been identified in the telephone signal, an extraction of the remote speaker signals may be performed. In other words, a plurality of output signals may be created by processing the received telephone signal.

In order to extract the individual remote speaker signals from the telephone signal, the telephone signal may be filtered and/or weighted. Weighting the telephone signal may particularly comprise attenuating the received telephone signal using a predetermined attenuation characteristic.

The attenuation characteristic may be determined based on the determined speaker activity, e.g.

$$g_m(n) = \begin{cases} \min\left\{g_m(n-1)\,g_{inc},\ 1\right\}, & \text{if } \left(act_m(n) > act_0\right), \\ \max\left\{g_m(n-1)\,g_{dec},\ g_{min}\right\}, & \text{otherwise.} \end{cases}$$

Here $g_{min}$ denotes the maximum attenuation. The parameters $g_{dec}$ and $g_{inc}$ may be used to reduce effects of short-term detection failures. These parameters may fulfil

$$0 \ll g_{dec} < 1 < g_{inc} \ll \infty.$$

Figure 6 shows an exemplary attenuation characteristic for two different remote speaker signals. Dashed line 619 shows the attenuation characteristic for the first remote speaker signal while dashed line 618 shows that attenuation characteristics for the second remote speaker signal. For the attenuation characteristic for extracting the first remote speaker signal, no attenuation is performed while the first speaker is active. If the second remote speaker is active the attenuation characteristic 619 takes a predetermined value. For the attenuation characteristic for extracting the second remote speaker signal it is vice versa.

In this example, $g_{min}$ was chosen as 0,05.

If two or more remote speakers are speaking simultaneously a filtering may be performed after the weighting step or instead of the weighting step. The filtering may be performed such that the pitch frequency and the corresponding harmonic frequencies for each remote speaker are filtered out of the telephone signal. Thus, the filtering may exhibit a comb filter structure.

As the pitch estimation may comprise uncertainties, problems may occur at high frequencies. Therefore, the attenuation may be reduced with increasing frequency.

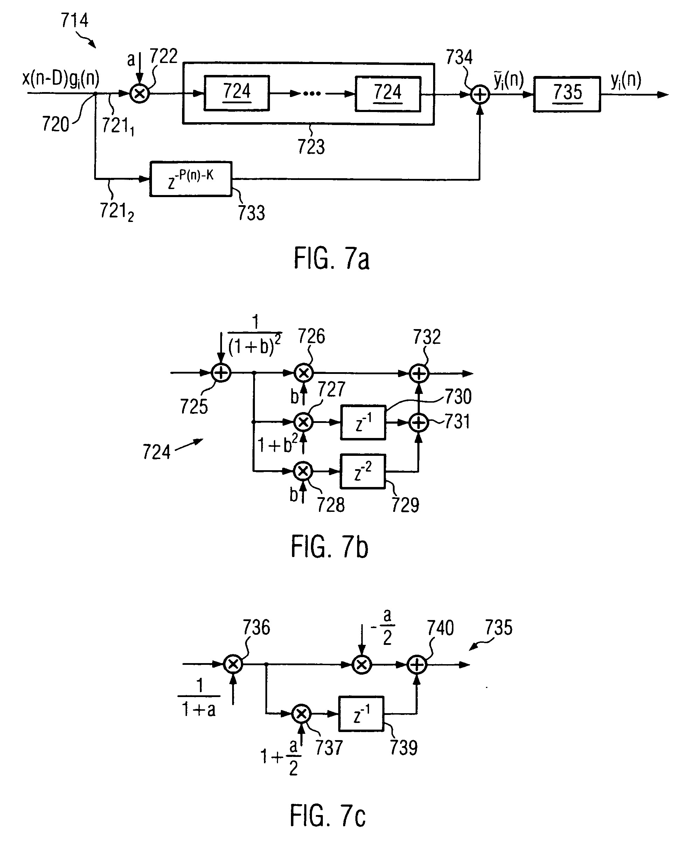

A filter arrangement which can achieve such a filtering is shown in Figures 7a to 7c.

The basic structure shown in Figure 7a is based on a combination of a low-pass filtered input signal and a delayed input signal, which may be delayed, for example, by one pitch period. For that purpose, the weighted delayed telephone signal $x(n-D)g_i(n)$ may be split into two signal paths at splitting point 720.

The low-pass filtered input signal may be obtained on a first signal path $721_1$ based on the weighted delayed telephone signal $x(n-D)g_i(n)$. The weighted delayed telephone signal $x(n-D)g_i(n)$ may be multiplied with a weighting factor "a" in a weighting unit 722.

The low-pass filter unit 723 may comprise K low-pass filters 724. Each of the low-pass filters 724 may be embodied as non-recursive second order filters, e.g. as

$$y_{i,\mathrm{tp},k}(n) = \frac{1}{(1+b)^2}\left[b\,y_{i,\mathrm{tp},k-1}(n) + (1+b^2)\,y_{i,\mathrm{tp},k-1}(n-1) + b\,y_{i,\mathrm{tp},k-1}(n-2)\right].$$

Here the index tp refers to low-pass and

$$y_{i,\mathrm{tp},0}(n) = a\,x_i(n-D)\,g_i(n)$$

In this example, b and K were chosen as b=0.8 and K=2, respectively.

An example for a low-pass filter 724 is shown in Figure 7b. Each low-pass filter may comprise multiplication units 725, 726, 727 and 728 and summation units 731 and 732 as well as filters 729 and 730.

The weighting factor "a" determines the maximum attenuation between the pitch frequencies. When specifying the attenuation or damping in decibel as

$$A_{\log} = 20\,\mathrm{dB}.$$

the factor a may be determined as

$$a = \frac{A_{\lim} - 1}{A_{\lim} + 1}$$

wherein

$$A_{\lim} = 10^{\frac{A_{\log}}{20\,\mathrm{dB}}}.$$

The delayed input signal may be obtained on a second signal path $721_2$ using a delay module 733.

The combination of the low-pass filtered input signal and the delayed input signal may be performed using a summation unit 734 and the obtained summed signal may read:

$$\tilde{y}_i(n) = y_{i,\mathrm{tp},K-1}(n) + x_i(n-D-P(n)-K)\,g_i(n-P(n)-K).$$

The delay P(n) may be chosen based on the estimated pitch frequency for the $m^{th}$ remote speaker signal, e.g. as

$$P(n) = \left\lfloor \frac{f_s}{\hat{f}_{\text{pit},m}(n)} + \frac{1}{2} \right\rfloor .$$

Here the operator ⌊···⌋ denotes a rounding to the next lower integer. Alternative algorithms may be used which allow for non-integer periods. In this case the rounding and the addition of ½ may be omitted in the above expression.

For further improvement a post filtering unit 735 may be used which yields an output signal $y_i(n)$ as

$$y_i(n) = \frac{1}{1+a} \left[ -\frac{a}{2} \tilde{y}_i(n) + \left(1 + \frac{a}{2}\right) \tilde{y}_i(n-1) \right] .$$

An exemplary post filter 735 is illustrated in Figure 7c, comprising multiplying units 736, 737 and 738 and a summation unit 740. The exemplary post filter 735 further comprises a delay unit 739.

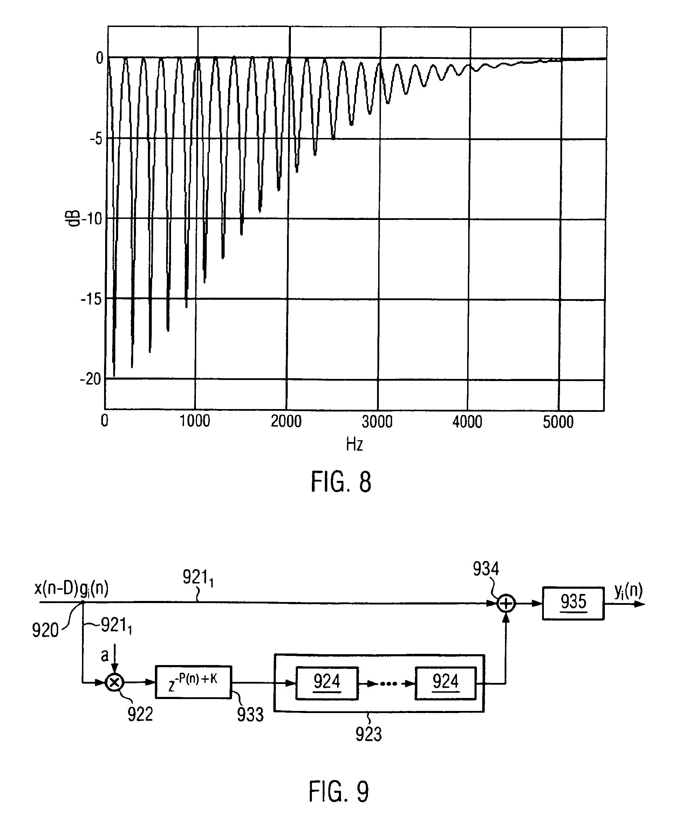

The frequency response of the filter structure as shown in Figure 7a is illustrated in Figure 8.

Here the pitch frequency $f_{\text{pit},m}(n)$ used was 200 Hz and the maximum attenuation was $A_{\log}$=20 dB.

An alternative structure to the filter structure shown in Figure 7a is illustrated in Figure 9. In this example, contrary to the example shown in Figure 7a, the low-pass filter unit 923 is arranged in the second signal path $921_2$ and the first signal path $921_1$ does not change the delayed and weighted telephone signal $x(n-D)g_i(n)$. In this case, the delay in the delay unit 933 is performed with an inverse sign, i.e. +K instead of -K.

Using the structure of Fig. 9 may result in a reduced group delay time. However, two time-dependent filters are connected in series in this case.

Finally, the output signals corresponding to the identified remote speaker signals may be output at different apparent positions. The more reliable the identification of the individual remote speaker signals is, the larger the distance between two apparent positions corresponding to two different remote speakers may be.

In particular, the apparent positions may be determined as:

$$p_m(n) = \left(1 - r(n)\right) p_{\text{mono}}(n) + r(n)\, p_{m,\text{max}}$$

where $p_{\text{mono}}(n)$ is the position which would be chosen if only one apparent position for all output signals was used, i.e. in the case of a monophonic sound reproduction, and $p_{m,\text{max}}$ are M different apparent positions which would be chosen if the identification step was performed with maximum reliability.

In this case, if the reliability of the combined analysis r(n) equals 0, all remote speaker signals are output at the same apparent position and if the reliability equals 1, all remote speaker signals are output at the M predetermined apparent positions.

Although the previously discussed embodiments and examples of the present invention have been described separately, it is to be understood that some or all of the above described features can also be combined in different ways. The discussed embodiments are not intended as limitations but serve as examples illustrating features and advantages of the invention.

## Claims

1.  Method for playback of a telephone signal during a conference call using a multi-loudspeaker playback system (100), comprising the steps of:

    receiving a telephone signal, wherein the telephone signal comprises audio data from a plurality of remote speakers;
    identifying in the received telephone signal at least two remote speaker signals corresponding to at least two different remote speakers based on the audio data;
    processing the received telephone signal to obtain at least two output signals each corresponding to a different one of the at least two remote speaker signals;

playing back the at least two output signals using the multi-loudspeaker playback system (100) such that for a listener at a predetermined listening position one of the at least two output signals originates from a first apparent position and a second one of the at least two output signals originates from a second apparent position, different from the first apparent position; and

determining reliability information on the identification of the at least two remote speaker signals, wherein the spatial distance between the first and the second apparent position is determined based on the determined reliability information.

2. Method according to claim 1, wherein the processing step comprises a weighting of the received telephone signal and/or a filtering of the received telephone signal.

3. Method according to claim 2, wherein the processing further comprises delaying the received telephone signal, thereby obtaining a delayed telephone signal, and weighting and/or filtering the delayed telephone signal.

4. Method according to claim 1, wherein the higher the reliability of the identification of the at least two remote speaker signals is, the larger the spatial distance between the first and the second apparent position is set.

5. Method according to claim 1 or 4, wherein the reliability information is determined based on an autocorrelation function of the received telephone signal.

6. Method according to one of the preceding claims, wherein the identifying step comprises a pitch estimation and/or a background noise estimation and/or a spectral envelope comparison.

7. Method according to claim 6, wherein the pitch estimation comprises repeatedly estimating at least one pitch frequency of the received telephone signal and analysing a frequency of occurrence of the estimated pitch frequencies.

8. Method according to claim 6 or 7, further comprising determining at least one pitch threshold frequency which separates the frequency ranges of the at least two different remote speakers from each other.

9. Method according to one of the claims 6 - 8, wherein the background noise estimation comprises a spectral envelope determination for the background noise in the received telephone signal.

10. Method according to one of the claims 6 - 9, wherein the spectral envelope comparison comprises a spectral envelope determination for one or more speech signals in the received telephone signal.

11. A computer program product, comprising one or more computer readable media having computer executable instructions for performing the steps of the method according to any one of the preceding claims, when run on a computer.

12. Apparatus for playback of a telephone signal during a conference call comprising:

means for receiving a telephone signal, wherein the telephone signal comprises audio data from a plurality of remote speakers, and
a control means, wherein the control means is configured to:

identify in the received telephone signal at least two remote speaker signals corresponding to at least two different remote speakers based on the audio data,
process the received telephone signal to obtain at least two output signals each corresponding to a different one of the at least two remote speaker signals, and playback the at least two output signals using a multi-loudspeaker playback system, such that for a listener at a predetermined listening position one of the at least two output signals originates from a first apparent position and a second one of the at least two output signals originates from a second apparent position, different from the first apparent position; and

wherein the apparatus is configured to determine reliability information on the identification of the at least two remote speaker signals, wherein the spatial distance between the first and the second apparent position is determined based on the determined reliability information.

**Patentansprüche**

1. Verfahren zum Abspielen eines Telefonsignals während eines Konferenzgesprächs unter Verwendung eines Abspielsystems mit mehreren Lautsprechern (100), das die folgenden Schritte umfasst:

   Empfangen eines Telefonsignals, wobei das Telefonsignal Audiodaten von mehreren entfernten Sprechern umfasst;
   Erkennen, aufgrund der Audiodaten, von mindestens zwei entfernten Sprechersignalen im empfangenen Telefonsignal, die mindestens zwei verschiedenen entfernten Sprechern zuzuordnen sind;
   Verarbeiten des empfangenen Telefonsignals, um mindestens zwei Ausgabesignale zu erhalten, die jeweils einem unterschiedlichen der mindestens zwei entfernten Sprechersignale zuzuordnen sind;
   Abspielen der mindestens zwei Ausgabesignale unter Verwendung des Abspielsystems mit mehreren Lautsprechern (100), so dass für einen Zuhörer an einer im Voraus bestimmten Hörposition eines der mindestens zwei Ausgabesignale von einer ersten scheinbaren Position stammt, und ein zweites der mindestens zwei Ausgabesignale von einer zweiten scheinbaren Position stammt, die sich von der ersten scheinbaren Position unterscheidet; und
   Feststellen von Zuverlässigkeitsinformationen im Hinblick auf das Erkennen der mindestens zwei entfernten Sprechersignale, wobei der räumliche Abstand zwischen der ersten und der zweiten scheinbaren Position aufgrund der festgestellten Zuverlässigkeitsinformationen festgestellt wird.

2. Verfahren nach Anspruch 1, wobei der Verarbeitungsschritt ein Wichten des empfangenen Telefonsignals und/oder ein Filtern des empfangenen Telefonsignals umfasst.

3. Verfahren nach Anspruch 2, wobei das Verarbeiten ferner das Verzögern des empfangenen Telefonsignals umfasst, wodurch ein verzögertes Telefonsignal erhalten wird, und das Wichten und/oder Filtern des verzögerten Telefonsignals umfasst.

4. Verfahren nach Anspruch 1, wobei der räumliche Abstand zwischen der ersten und der zweiten scheinbaren Position umso größer ist, je höher die Zuverlässig des Erkennens der mindestens zwei entfernten Sprechersignale ist.

5. Verfahren nach Anspruch 1 oder 4, wobei die Zuverlässigkeitsinformationen aufgrund einer Autokorrelationsfunktion des empfangenen Telefonsignals festgestellt werden.

6. Verfahren nach einem der vorhergehenden Ansprüche, wobei der Erkennungsschritt eine Tonhöhenschätzung und/oder eine Hintergrundgeräuschschätzung und/oder Klangspektrenvergleich umfasst.

7. Verfahren nach Anspruch 6, wobei die Tonhöhenschätzung das wiederholte Schätzen von mindestens einer Tonhöhenfrequenz des empfangenen Telefonsignals und das Analysieren einer Häufigkeit des Vorkommens der geschätzten Höhenfrequenzen umfasst.

8. Verfahren nach Anspruch 6 oder 7, das ferner das Feststellen mindestens einer Tonhöhenschwellenfrequenz umfasst, die die Frequenzbereiche der mindestens zwei voneinander unterschiedlichen entfernten Sprechern voneinander trennt.

9. Verfahren nach einem der Ansprüche 6 - 8, wobei die Hintergrundgeräuschschätzung das Feststellen eines Klangspektrums für das Hintergrundgeräusch im empfangenen Telefonsignal umfasst.

10. Verfahren nach einem der Ansprüche 6 - 9, wobei der Klangspektrenvergleich das Feststellen eines Klangspektrums für eines oder mehrere Sprachsignal(e) im empfangenen Telefonsignal umfasst.

11. Computerprogrammprodukt, das einen oder mehrere computerlesbare Datenträger mit von einem Computer ausführbaren Anweisungen zum Durchführen der Schritte des Verfahrens nach einem der vorhergehenden Ansprüche umfasst, wenn sie auf einem Computer ausgeführt werden.

12. Vorrichtung zum Abspielen eines Telefonsignals während eines Konferenzgesprächs, die Folgendes umfasst:

   Mittel zum Empfangen eines Telefonsignals, wobei das Telefonsignal Audiodaten von mehreren entfernten Sprechern umfasst, und

ein Steuerinstrument, wobei das Steuerinstrument so konfiguriert ist, dass es:

im empfangenen Telefonsignal mindestens zwei entfernte Sprechersignale erkennt, die aufgrund der Audiodaten mindestens zwei verschiedenen entfernten Sprechern zuzuordnen sind;

das empfangene Telefonsignal verarbeitet, um mindestens zwei Ausgabesignale zu erhalten, die jeweils einem unterschiedlichen der mindestens zwei entfernten Sprechersignalen zuzuordnen sind, und die mindestens zwei Ausgabesignale unter Verwendung eines Abspielsystems mit mehreren Lautsprechern abspielt, so dass für einen Zuhörer an einer im Voraus bestimmten Hörposition eines der mindestens zwei Ausgabesignale von einer ersten scheinbaren Position stammt, und ein zweites der mindestens zwei Ausgabesignale von einer zweiten scheinbaren Position stammt, die sich von der ersten scheinbaren Position unterscheidet; und

wobei die Vorrichtung so konfiguriert ist, dass sie Zuverlässigkeitsinformationen im Hinblick auf das Erkennen der mindestens zwei entfernten Sprechersignale feststellt, wobei der räumliche Abstand zwischen der ersten und der zweiten scheinbaren Position aufgrund der festgestellten Zuverlässigkeitsinformationen festgestellt wird.

## Revendications

1. Procédé de lecture d'un signal téléphonique lors d'une conférence téléphonique utilisant un système de lecture à multi haut-parleurs (100), comprenant les étapes :

de réception d'un signal téléphonique, le signal téléphonique comprenant des données audio provenant d'une pluralité de locuteurs distants ;

d'identification, dans le signal téléphonique reçu, d'au moins deux signaux distants de locuteurs correspondant à au moins deux locuteurs distants, basée sur les données audio ;

de traitement du signal téléphonique reçu pour obtenir au moins deux signaux de sortie chacun correspondant à un signal différent d'au moins deux signaux distants de locuteurs ;

la lecture d'au moins deux signaux de sortie utilisant le système de lecture à multi-haut-parleurs (100) de sorte que pour un auditeur à une position d'écoute prédéterminée l'un des au moins deux signaux de sortie émane d'une première position apparente et un deuxième de l'un des deux signaux de sortie émane d'une deuxième position apparente, différente de la première position apparente ; et

de détermination des informations de fiabilité sur l'identification d'au moins deux signaux de locuteurs, la distance spatiale entre la première et deuxième position apparente étant déterminée en fonction des informations sur la fiabilités déterminées.

2. Procédé selon la revendication 1, dans lequel l'étape de traitement comprend une pondération du signal téléphonique reçu et/ou le filtrage du signal téléphonique reçu.

3. Procédé selon la revendication 2, dans lequel le traitement comprend aussi le retardement du signal téléphonique reçu, permettant ainsi d'obtenir un signal téléphonique retardé, et la pondération et/ou le filtrage du signal téléphonique retardé.

4. Procédé selon la revendication 1, dans lequel plus la fiabilité de l'identification d'au moins des deux signaux de locuteurs distants est élevée, plus est la distance spatiale entre la première et la deuxième position apparente réglée est grande.

5. Procédé selon la revendication 1 ou 4, dans lequel l'information de fiabilité est déterminée sur la base d'une fonction d'autocorrélation du signal téléphonique reçu.

6. Procédé selon l'une des revendications précédentes, dans lequel l'étape d'identification comprend une estimation de la hauteur du son et/ou une estimation du bruit de fond et/ou une comparaison de l'enveloppe spectrale.

7. Procédé selon la revendication 6, dans lequel l'estimation de la hauteur du son comprend l'estimation répétée d'au moins une fréquence de hauteur du son du signal téléphonique reçu et l'analyse d'une fréquence d'apparition des fréquences de hauteur du son estimées.

8. Procédé selon la revendication 6 ou 7, comprenant aussi la détermination d'au moins une fréquence de seuil de hauteur du son qui sépare les gammes de fréquences entre au moins deux des locuteurs distants différents l'un de l'autre.

9. Procédé selon l'une des revendications 6 à 8, dans lequel l'estimation du bruit de fond comprend la détermination d'une enveloppe spectrale pour le bruit de fond dans le signal téléphonique reçu.

10. Procédé selon l'une des revendications 6 à 9, dans lequel la comparaison de l'enveloppe spectrale comprend la détermination d'une enveloppe spectrale pour un ou plusieurs signaux vocaux dans le signal téléphonique reçu.

11. Produit de programme informatique, comprenant un ou plusieurs supports lisible par ordinateur ayant des instructions exécutables par ordinateur pour effectuer les étapes du procédé selon l'une quelconque des revendications précédentes, lorsqu'il est exécuté sur un ordinateur.

12. Appareil pour la lecture d'un signal téléphonique lors d'une conférence téléphonique comprenant :

un moyen permettant de recevoir un signal téléphonique, le signal téléphonique comprenant des données audio provenant d'une pluralité de locuteurs distants, et
un moyen de commande, le moyen de commande étant configuré pour :

l'identification dans le signal téléphonique reçu d'au moins deux signaux distants de locuteurs correspondant à au moins deux locuteurs distants différents basée sur les données audio, le traitement du signal téléphonique reçu pour obtenir au moins deux signaux de sortie chacun correspondant à un signal différent d'au moins deux signaux distants de locuteurs; et

la lecture d'au moins deux signaux de sortie utilisant un système de lecture à multi-haut-parleurs de sorte que pour un auditeur à une position d'écoute prédéterminée l'un des au moins deux des signaux de sortie émane d'une première position apparente et un deuxième de l'un des deux signaux de sortie émane d'une deuxième position apparente, différente de la première position apparente ; et
dans lequel l'appareil est configuré pour déterminer des informations de fiabilité sur l'identification d'au moins deux signaux de locuteurs, la distance spatiale entre la première et deuxième position apparente étant déterminée en fonction des informations de fiabilité déterminées.

FIG. 1

FIG. 2

FIG. 3

FIG. 4

FIG. 5

FIG. 6

714

$x(n-D)g_i(n)$

a ↓ 722

724 ... 724

723

720 721₁

721₂ $z^{-P(n)-K}$ 733

734 $\bar{y}_i(n)$ 735 $y_i(n)$

## FIG. 7a

$\dfrac{1}{(1+b)^2}$ 726 732

725

b ↑ 727

$1+b^2$ ↑ $z^{-1}$ 730

731

724

b ↑ 728 $z^{-2}$ 729

## FIG. 7b

736 $-\dfrac{a}{2}$ 740 735

$\dfrac{1}{1+a}$

$1+\dfrac{a}{2}$ 737 $z^{-1}$ 739

## FIG. 7c

FIG. 8

FIG. 9

**EP 2 456 184 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070217590 A1
- WO 2007006856 A1
- WO 20100266112 A1
- US 20090041271 A1

### Non-patent literature cited in the description

- Bandwidth Extension of Telephony Speech. **B. ISER ; G. SCHMIDT.** Speech and Audio Processing in Adverse Environments. Springer, 2008, 135-184